(19) **Europäisches Patentamt**
**European Patent Office**
**Office européen des brevets**

(11) **EP 2 213 162 B1**

(12) **EUROPEAN PATENT SPECIFICATION**

(45) Date of publication and mention
of the grant of the patent:
**05.12.2018 Bulletin 2018/49**

(21) Application number: **08852986.2**

(22) Date of filing: **20.11.2008**

(51) Int Cl.:
**A01K 1/015** *(2006.01)*    **A01K 23/00** *(2006.01)*

(86) International application number:
**PCT/JP2008/071090**

(87) International publication number:
**WO 2009/066717 (28.05.2009 Gazette 2009/22)**

(54) **LITTER FOR ANIMALS**

TIERSTREU

LITIÈRE POUR ANIMAUX

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.11.2007   JP 2007303612**

(43) Date of publication of application:
**04.08.2010   Bulletin 2010/31**

(73) Proprietor: **Unicharm Corporation**
**Ehime 799-0111 (JP)**

(72) Inventors:
• **MATSUO, Takayuki**
**Tokyo 108-6326 (JP)**
• **IKEGAMI, Takeshi**
**Tokyo 108-6326 (JP)**
• **HIROSHIMA, Kenji**
**Tokyo 108-6326 (JP)**

• **MATSUMOTO, Hiroshi**
**Sendai-shi**
**Miyagi 980-0011 (JP)**
• **KAMEYAMA, Hiroyuki**
**Sendai-shi**
**Miyagi 980-0011 (JP)**

(74) Representative: **Murgitroyd & Company**
**Scotland House**
**165-169 Scotland Street**
**Glasgow G5 8PL (GB)**

(56) References cited:
**EP-A1- 2 110 017         WO-A1-2008/096457**
**WO-A1-2008/096457    JP-A- 4 030 735**
**JP-A- 9 271 283          JP-A- 2003 023 894**
**JP-A- 2003 023 894     JP-A- 2004 290 172**
**JP-A- 2005 027 620     JP-A- 2005 237 385**
**JP-A- 2006 246 797     JP-A- 2008 193 938**
**US-A- 4 085 704          US-A1- 2004 025 798**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to animal litter for animals which is used as spreading material for a litter box of animals such as cats and dogs.

BACKGROUND ART

Conventionally, as an animal litter box for cats, dogs, and so forth housed indoors, the box in which animal litter composed of granular materials referred to as so-called "cat litter" is put in a plastic container has been known. Urine or the like excreted by animals is absorbed by such animal litter. A pet owner removes the animal litter contaminated with the urine or stool from the container together with the stool or the like, and fills the container with new animal litter according to the removed amount. However, cats have a habit of stirring the animal litter with their legs after excretion, and occasionally, the animal litter attached with urine or stool comes to cling to the legs. In addition, because the contaminated animal litter comes to be scattered, it is difficult to completely remove only the contaminated part.

As an animal litter box to solve such problems, an animal litter box of a type in which granular materials having water repelling property are used as the animal litter and in which the animal litter is spread on a liquid-absorbing sheet that absorbs fluid such as urine and an animal litter box of a type in which the animal litter is spread via a grating or the like on the liquid-absorbing sheet have been known. According to such litter boxes, urine excreted by animals passes through the granular materials with water repelling property and is absorbed by the liquid-absorbing sheet, and therefore, the generation of an unpleasant smell can be suppressed, and therewith, frequency of exchanging the animal litter can be reduced, whereby the work of pet owner is reduced.

As the animal litter for animals which is used for such litter boxes, an animal litter in which particles of zeolite, sepiolite, or attapulgite are solidified with cement and which is composed of a plurality of granular materials subjected to water- repelling treatment has been proposed (see Japanese unexamined publication No. 2006-246797, herein after referred to as Patent document 1).

US 2004/0025798 A1 discloses a litter composition comprising a substantially particulate primary absorbent material, such as silica gel, a binding agent and optionally a supplemental absorbent material comprising up to approximately 60% by weight of the litter composition.

US 4,085,704 discloses an animal litter comprising a suitable absorbent material admixed with a vehicle, such as silica gel, which has been previously impregnated with an odour control agent.

JP 2003 023894 A discloses an excreta treatment agent composition including combustion ash, a cement-based solidifying material and at least one of alkali metal salt, alkaline-earth metal salt and zeolite.

WO 2008/096457, to which Article 54(3) EPC applies, discloses an animal litter comprising particulate matter, wherein granules of the particulate matter comprise particles including an inorganic porous material and an inorganic binder which binds the particles together, wherein the inorganic binder includes a non-cement solidifying agent.

DISCLOSURE OF THE INVENTION

Problems to be Solved by the Invention

However, in the animal litter for animals described in Patent document 1, a large amount of ammonia is generated from the excreted urine and has been the cause of an unpleasant smell.

Accordingly, an object of the present invention is to provide animal litter for animals by which the amount of ammonia generated from excreted urine is small. This object can be achieved by the features as defined by the independent claim. Further enhancements are characterised by the dependent claims.

Means for Solving the Problems

The present inventors have intensively investigated in order to solve the above problem, a result of which they found that the above problem could be solved by using granular materials containing, particles of inorganic porous material(s), silica gel, and an inorganic binder. More specifically, exemplary embodiments of the present invention provides the following.

According to a first aspect, in an animal litter for animals having a plurality of granular materials, each of the plurality of granular materials includes: particles containing an inorganic porous material; silica gel; and an inorganic binder that integrally binds the particles and the silica as defined in present claim 1.

According to a second aspect, in the animal litter for animals as described in the first aspect, the inorganic porous material is at least one kind selected from a group consisting of zeolite, attapulgite, sepiolite, diatomaceous earth, and diatomaceous shale.

According to a third aspect, in the animal litter for animals as described in any one of the previous aspects, the plurality of granular materials has a content of the inorganic binder of 5 to 30% by mass.

According to a fourth in the animal litter for animals as described in any one of the first to third aspects, the plurality of granular materials is subjected to water-repellent treatment.

According to a fifth aspect, in the animal litter for animals as described in any one of the firs to fourth aspects, the granular materials include a fragrance.

According to a sixth aspect, in the animal litter for animals as described in any one of the first to fifth aspects, average particle pH of the granular materials is no more than 12.

According to an seventh aspect, in the animal litter for animals as described in any one of the first to sixth aspects, average particle strength of the granular materials is at least 30 N.

According to a aspect, in the animal litter for animals as described in any one of the first to aspects, the granular material has a columnar shape with an average particle diameter of 4 to 7 mm and an average particle length of 6 to 15 mm.

Effects of the Invention

According to the animal litter for animals of embodiments of the present invention, the amount of ammonia generated from excreted urine can be reduced.

PREFERRED MODE FOR CARRYING OUT THE INVENTION

Hereinafter, the exemplary embodiments of the present invention will be explained on the basis of preferred embodiments. The animal litter for animals of embodiments of the present invention includes a plurality of granular materials.

The granular materials in exemplary embodiments of the present invention are mainly composed of particles of inorganic porous materials and silica gel. Furthermore, the granular materials are formed by integrally binding many particles of inorganic porous materials and silica gel by way of an inorganic binder. Zeolite, sepiolite, attapulgite, diatomaceous earth, and diatomaceous shale can be exemplified the inorganic porous materials used in exemplary embodiments. In exemplary embodiments, one kind among these can be used, and also, two or more kinds can be used by mixing. The inorganic porous material has a property of absorbing the odor of ammonia or the like, and therefore, animal litter for animals which is excellent in deodorization performance can be obtained by composing the granular materials to mainly contain particles of the inorganic porous material.

For the particles of inorganic porous materials, it is preferable to use particles each having a small particle diameter from the viewpoint of strengthening the strength of the granular materials formed from the particles. More specifically, the particle diameter of the particles of inorganic porous materials is preferably 300 $\mu$m or less, more preferably 200 $\mu$m or less, and most preferably 100 $\mu$m or less.

A content of the particles of inorganic porous materials in the granular materials is preferably 50 to 95% by mass and more preferably 70 to 90% by mass. In a case of the content of the particles of inorganic porous materials being less than 50% by mass, it is feared that the deodorization effect of the granular materials may lower. Moreover, in a case of the content of the particles of inorganic porous materials being more than 95% by mass, it is feared that the granular materials will not obtain sufficient strength.

The granular materials in exemplary embodiments of the present invention include silica gel in addition of the particles of inorganic porous materials. Silica gel has a property of absorbing odorous components such as ammonia, and the granular material(s) in the animal litter for animals of exemplary embodiments of the present invention can suppress the generation of ammonia from excreted urine, by the property of absorbing ammonia by the silica gel.

As the silica gel used in exemplary embodiments of the present invention, although any one of A-type silica gel, B-type silica gel, and C-type silica gel can be used, it is preferable to use C-type silica gel from the aspect of having many fine pores and excellent adsorption capacity of ammonia or water.

A content of silica gel in the granular materials in exemplary embodiments of the present invention is preferably 3 to 20% by mass, and more preferably is 5 to 15% by mass. In a case of the content of silica gel being less than 3%, it is feared that the effect of suppressing generation of ammonia from excreted urine may lower. Moreover, in a case of the content of silica gel being more than 20% by mass, it is feared that the granular materials will not obtain sufficient strength. Cement is used as the inorganic binder used in the present invention.

It should be noted that, in the present specification, cement indicates a solidifying agent having calcium silicate as the main component and that hardens by reacting with water (hydrating). Portland cement, white cement, and so forth can be exemplified as the cement. The strength of the granular materials in the animal litter for animals of the present invention can be enhanced by using the cement as the inorganic binder.

Moreover, it is also preferable to use low-alkali cement as the cement. Low-alkali cement is cement in which alkali metals (Na, K) contained in the cement have been adjusted to a no more than a predetermined content. By using the low-alkali cement, the pH of the granular materials can be made low. By setting the pH of the granular materials to be low, the burden on the legs or the like of animals using the litter box can be reduced.

In exemplary embodiments of the present invention, the content of the inorganic binder in the granular materials is preferably 5 to 30% by mass, and more preferably 10 to 20% by mass. If the overall content of the inorganic binder is less than 5% by mass, it is feared that the granular materials will not obtain sufficient strength. Moreover, if the overall content of the inorganic binder is more than 30% by mass, it is feared that the deodorization effect of the granular materials may lower. Moreover, the content of cement in the inorganic binder is preferably 40% by mass or more, and more preferably 50% by mass or more. If the content of cement is less than 40% by mass, it is feared that the granular materials will not obtain sufficient strength.

It is preferable to subject the granular materials in an exemplary embodiment of the present invention to water repellent treatment. By subjecting the granular materials to water repellent treatment, liquid penetration efficiency of the granular materials is improved. Moreover, it becomes difficult for liquid such as urine to be absorbed in the granular materials, whereby the lifetime of the granular materials can be lengthened. Furthermore, liquid residue on the granular materials can be reduced and generation of odor can also be reduced.

The water-repellent treatment can be performed by, for example, spray-applying a water-repelling agent onto surfaces of the granular materials. As the water-repelling agent, a wax resin such as paraffin wax, a silicon resin, a fluorine resin, and so forth can be used.

In the case of applying the water-repelling agent to the surfaces of the granular materials, the application amount is preferably 0.05 to 1% by mass with respect to the mass of the granular materials, and is more preferably 0.1 to 0.5% by mass.

It is preferable for the granular materials in exemplary embodiments of the present invention to include a fragrance. By a masking effect of a fragrance, the odor of urine, stool, or the like can be suppressed. As the fragrance, for example, alcohols such as geraniol, citronellol, citral, eugenol, phenethyl alcohol, thymol, linalool, leaf alcohol, menthol, and benzyl alcohol and aldehydes such as hexylcinnamaldehyde are preferably used.

Although the granular materials of exemplary embodiments of the present invention are not particularly limited to a granulation shape such as a spherical shape, columnar shape, or the like, it is preferable to granulate in a columnar shape from the viewpoint of obtaining a litter with less splashing during use.

The granular materials in exemplary embodiments of the present invention can be granulated by using, for example, a disk pelleter, a briquette machine, or a tabletting machine. Among these, it is preferable to granulate using a disk pelleter.

Moreover, in the case of granulating the granular materials in a columnar shape, an average particle diameter (diameter of the bottom surface of the columnar shape) of the granular materials is preferably 4 to 7 mm, and more preferably 5.5 to 6.5 mm. An average particle length (height of the columnar shape) of the granular materials is preferably 6 to 15 mm, and more preferably 8 to 12 mm.

In this case, the average particle diameter is set as the average value from measuring particle diameters of 20 granular materials. Moreover, the average particle length is determined as the average value from measuring particle lengths of 50 granular materials.

It is preferable for an average particle pH of the granular materials in exemplary embodiments of the present invention to be 12 or less. By setting the average particle pH of the granular materials to be 12 or less, as described above, the burden on the legs or the like of the animals can be reduced and the generation of ammonia can be suppressed.

The average particle pH of the particle materials is measured according to the following "pH Measurement Method".

pH Measurement Method

The granular materials are crushed, and the materials having passed through an 80-mesh sieve are made a test sample. To 1 g of the test sample, 2.5 ml of distilled water is dripped, and after gentle stirring, left to stand.

After 30 minutes, the pH of the test sample is measured by a pH meter (manufactured by HANNA Instruments, Skincheck).

The average particle strength of the granular materials in exemplary embodiments of the present invention is preferably at least 30 N, and more preferably at least 50 N. If the average particle strength is less than 30 N, it is feared that scattering of the litter by breaking of the granular materials during use will easily occur.

The average particle strength of the granular materials is measured according to the following "Method of Measuring Particle Strength".

**EP 2 213 162 B1**

Method of Measuring Particle Strength

The granular material left to stand for 24 hours or more under an atmosphere of 60% humidity and at a room temperature of 25°C are used as a test sample.

The granular material of the test sample is placed on a measuring table of a manual handle-type digital force gauge stand (manufactured by NIDEC-SHIMPO Corporation, FGS-50H).

A digital force gauge (manufactured by NIDEC-SHIMPO Corporation, FGN-50B) is attached to the digital force gauge stand, and set so that the tip of a measurement adapter (projecting shape: 70 degree angle cone) makes contact with the granular material.

The handle is turned slowly by hand, and the granular material is compressed by the measurement adapter. The strength at the time that the granular material breaks is set as the particle strength measurement value.

Measurement is carried out 10 times, and the average value thereof is set as the average particle strength.

In addition, in the case of the granular material having a columnar shape, the particle strength is measured by setting the tip of the measurement adapter so as to make contact perpendicular to the height direction of the granular material.

Next, a preferable method of manufacturing the animal litter for animals of exemplary embodiments of the present invention is described below. The granular materials composing the litter of exemplary embodiments of the present invention are granulated from a mixture including the inorganic porous materials, silica gel, and the inorganic binder. First, the inorganic porous materials, silica gel, and the inorganic binder are mixed at a predetermined ratio, water is added thereto, and then stirred and mixed uniformly in a mixer or the like so as to prevent clumps from being generated.

The granular materials are granulated using this mixture. The granular materials in exemplary embodiments of the present invention can be granulated using a granulator for various fine particles such as a disk pelleter, a briquette machine, and a tabletting machine.

Next, the obtained granular materials are left to stand for a predetermined time period in order to accelerate solidification of the inorganic binder. This step is referred to as a curing step. It is preferable that the curing period is 72 hours or more from the viewpoint of sufficiently solidifying the inorganic binder, although it differs according to temperature.

Afterwards, the sufficiently solidified granular materials are dried using a dryer. This drying is performed using a rotary kiln dryer, for example. It is preferable to perform drying so that moisture percentage of the granular materials is 10% or less.

The moisture percentage is obtained by further drying the dried granular materials again for 24 hours at 110°C after drying, and setting the difference between masses of the granular materials before and after drying again as the moisture amount of the granular materials, and dividing the moisture amount by the mass of the granular materials before drying again.

Large and small granular materials from the granular materials thus obtained are removed from the in a sifting step, whereby granular materials of a predetermined size can be obtained.

In this manner, the animal litter for animals of at least one exemplary embodiment of the present invention is manufactured.

Since at least one embodiment of the animal litter for animals of the present invention has a large liquid passing ratio, in particular, it is suitably used for a two-layer structured animal litter box made by spreading litter across a liquid-absorbing sheet that absorbs fluid such as urine directly, or via a grating or the like.

EXAMPLES

Hereinafter, exemplary embodiments of the present invention are described in further detail by Examples. However, the scope of the present invention is not to be limited to the Examples.

Example 1

(1) Mixing and Granulating Raw Materials for Granular Materials

Seventy parts by mass of zeolite powder (product of Ayashi, Miyagi Prefecture, 60-mesh pass product, average particle diameter of 150 μm, moisture of 7% or less), 20 parts by mass of white cement (manufactured by Taiheiyo Cement Corporation), and 10 parts by mass of C-type silica gel (product of Qingdao, China) were mixed, 40 parts by mass of water was further added thereto, and then stirred and mixed by a Loedige mixer.

The stirred and mixed mixture was compressed and granulated by a disk pelleter (manufactured by Dalton, Co., Ltd.). The outlet opening dimension of the disk was 5.5 mm in diameter, 35 mm in disk thickness, and 12 mm in effective length.

The granulated materials thus obtained were 5.5 mm in diameter and 25 mm in average particle length.

(2) Curing Step

The granulated materials thus obtained were left to stand for 72 hours at a room temperature of 20°C to promote the solidification reaction of cement.

(3) Drying Step

The granular materials subjected to the curing step were dried using a rotary kiln dryer until the resulting moisture percentage was 10% or less. In the drying step, the granular materials were compressed, and breakage occurred in a portion thereof. As a result, the granular materials obtained after the drying step were 5.5 mm in diameter and 9 mm in average particle length.

(4) Water-Repelling Agent Coating Step

Wax resin (manufactured by Nicca Chemical Co., Ltd., TH-44) was used as a water-repelling agent. An aqueous solution in which the water-repelling agent had been diluted 50 times with water was coated to be 10% by mass with respect to the mass of the granular materials. The coating was performed by spraying the aqueous solution of the water-repelling agent while stirring and mixing the granular materials.

(5) Sifting Step

The granular materials thus obtained were first sifted through a sieve with 10 mm x 10 mm mesh to remove granular materials larger than a predetermined size, and then sifted through a sieve with 5 mm x 10 mm mesh to remove granular materials and powdery materials smaller than a predetermined size. Then, granular materials of sizes within a predetermined range were obtained.
In this manner, the animal litter for animals of Example 1 was obtained.

Example 2

The animal litter for animals of Example 2 was obtained in the same manner as in Example 1, except that 75 parts by mass of zeolite powder, 20 parts by mass of white cement, and 5 parts by mass of silica gel were used as the raw materials for granular materials in step (1) of Example 1.

Example 3 (not part of the invention)

The animal litter for animals of Example 3 was obtained in the same manner as in Example 1, except that 70 parts by mass of zeolite powder, 10 parts by mass of the non-cement solidifying agent (composition: 80% by mass of 1/2 hydrate of calcium sulfate, 15% by mass of magnesium oxide, and 5% by mass of other metal oxides), 10 parts by mass of white cement, and 10 parts by mass of silica gel were used as the raw materials for granular materials in step (1) of Example 1.

Example 4 (not part of the invention)

The animal litter for animals of Example 4 was obtained in the same manner as in Example 1, except that 70 parts by mass of zeolite powder, 10 parts by mass of a non-cement solidifying agent, 10 parts by mass of white cement, and 10 parts by mass of silica gel were used as the raw materials for granular materials in step (1) of Example 1 and that the water-repelling agent was not used.

Comparative Example

Animal litter for animals of a Comparative Example was obtained in the same manner as in Example 1, except that 80 parts by mass of zeolite powder and 20 parts by mass of white cement were used as the raw materials for granular materials in step (1) of Example 1.
The average particle pH, amount of generated ammonia, average particle strength, and liquid passing ratio were measured for the animal litter for animals obtained in the Examples and the Comparative Example. The results are shown in the following Table 1.

It should be noted that the average particle pH and the average particle strength were measured according to the aforementioned methods. Moreover, the amount of generated ammonia and the liquid passing ratio were measured according to the following "Measuring Method for Amount of Generated Ammonia" and "Measuring Method for Liquid Passing Ratio".

Measuring Method for Amount of Generated Ammonia

Fifty milliliters of the granular materials was immersed in cat urine for 10 minutes, after which excess urine was wiped off with a paper towel (manufactured by Nippon Paper Crecia Co., Ltd., Kim wipe), and then the granular materials were sealed in a container having a volume of 200 ml.
The container was left to stand for 96 hours in a constant temperature bath of 35°C, after which the amount of generated ammonia was measured by way of a detector tube.

Measuring Method for Liquid Passing Ratio

A cylinder of 50 mm in diameter and 30 mm in depth was placed on the top surface of a grating having many openings of 3 mm x 8 mm in size. The cylinder was filled with the granular materials, and 20 ml of a normal saline solution was dripped from a height of 20 mm above the cylinder over a period of 10 seconds. A tray for accommodating the granular materials and the normal saline solution that passed through the grating was placed below the grating, and the mass (A) of the normal saline solution having passed through the grating after 15 seconds had elapsed after completion of dripping was measured. The liquid passing ratio was obtained from the following equation.

$$\text{Liquid passing ratio (\%)} = A/20 \times 100$$

Table 1

| | Inorganic porous material | | Inorganic binder | | | | Silica gel | water repellent agent | pH | Amount of generated NH₃ | Particle strength | Liquid passing ratio |
|---|---|---|---|---|---|---|---|---|---|---|---|---|
| | | % by mass | Non-cement | % by mass | cement | % by mass | % by mass | additive amount | | (ppm) | N | % |
| Example 1 | Zeolite | 70 | CaSo₄+MgO | 0 | White cement | 20 | 10 | 0.2% | 11.4 | 10 | 95 | 97.6 |
| Example 2 | Zeolite | 75 | CaSo₄+MgO | 0 | White cement | 20 | 5 | 0.2% | 11.8 | 10 | 113 | 96.4 |
| Example 3 | Zeolite | 70 | CaSo₄+MgO | 10 | White cement | 10 | 10 | 0.2% | 10.5 | 7 | 75 | 96.2 |
| Example 4 | Zeolite | 70 | CaSo₄+MgO | 10 | White cement | 10 | 10 | - | 10.1 | 12 | 64 | 88.1 |
| Comparative Example | Zeolite | 80 | - | - | White cement | 20 | - | 0.2% | 11.4 | 38 | 80 | 95.0 |

As is apparent from the results shown in Table 1, it has been found that the animal litter for animals of each of the Examples has a small amount of ammonia generated, compared to the animal litter for animals of the Comparative Example. In particular, it has been found that the animal litter for animals of Examples 3 and 4 in which cement and the non-cement solidifying agent were used as the inorganic binder had low pH as well.

## Claims

1. An animal litter for animals including a plurality of granular materials,
   wherein each of the plurality of granular materials comprises: particles containing an inorganic porous material; silica gel; and an inorganic binder that integrally binds the particles and the silica gel, and
   wherein each of the plurality of granular materials has a content of the inorganic porous material of 70 to 90% by mass, and a content of the silica gel of 3 to 20% by mass,
   **characterised by** that the inorganic binder consists only of calcium silicate based cement.

2. The animal litter for animals according to claim 1, wherein the inorganic porous material is selected from at least one of the group consisting of zeolite, attapulgite, sepiolite, diatomaceous earth and diatomaceous shale.

3. The animal litter for animals according to claim 1 or 2, wherein the plurality of granular materials is subjected to water-repellent treatment.

4. The animal litter for animals according to any one of claims 1 to 3, wherein the granular materials comprise a fragrance.

5. The animal litter for animals according to any one of claims 1 to 4, wherein average particle pH of the granular materials is no more than 12.

6. The animal litter for animals according to any one of claims 1 to 5, wherein average particle strength of the granular materials is at least 30 N.

7. The animal litter for animals according to any one of claims 1 to 6, wherein the granular material has a columnar shape with an average particle diameter of 4 to 7 mm and an average particle length of 6 to 15 mm.

## Patentansprüche

1. Eine Tierstreu für Tiere, die eine Vielzahl von körnigen Materialien umfasst,
   wobei jedes der Vielzahl von körnigen Materialien Folgendes beinhaltet: Teilchen, die ein anorganisches poröses Material enthalten; Kieselgel; und ein anorganisches Bindemittel, das die Teilchen und das Kieselgel integral bindet, und
   wobei jedes der Vielzahl von körnigen Materialien einen Gehalt des anorganischen porösen Materials von 70 bis 90 Masse-% und einen Gehalt des Kieselgels von 3 bis 20 Masse-% aufweist,
   **dadurch gekennzeichnet, dass** das anorganische Bindemittel nur aus Zement auf Calciumsilicatbasis besteht.

2. Tierstreu für Tiere gemäß Anspruch 1, wobei das anorganische poröse Material aus mindestens einem von der Gruppe, bestehend aus Zeolith, Attapulgit, Sepiolith, Diatomeenerde und Diatomeenschiefer, ausgewählt ist.

3. Tierstreu für Tiere gemäß Anspruch 1 oder 2, wobei die Vielzahl von körnigen Materialien einer wasserabweisenden Behandlung unterzogen wird.

4. Tierstreu für Tiere gemäß einem der Ansprüche 1 bis 3, wobei die körnigen Materialien einen Duftstoff beinhalten.

5. Tierstreu für Tiere gemäß einem der Ansprüche 1 bis 4, wobei der durchschnittliche Teilchen-pH der körnigen Materialien nicht mehr als 12 beträgt.

6. Tierstreu für Tiere gemäß einem der Ansprüche 1 bis 5, wobei die durchschnittliche Teilchenfestigkeit der körnigen Materialien mindestens 30 N beträgt.

7. Tierstreu für Tiere gemäß einem der Ansprüche 1 bis 6, wobei das körnige Material eine stängelige Form mit einem durchschnittlichen Teilchendurchmesser von 4 bis 7 mm und einer durchschnittlichen Teilchenlänge von 6 bis 15 mm aufweist.

**Revendications**

1. Une litière animale pour animaux incluant une pluralité de matériaux granulaires,
dans laquelle chaque matériau de la pluralité de matériaux granulaires comprend : des particules contenant un matériau poreux inorganique ; un gel de silice ; et un liant inorganique qui lie de façon solidaire les particules et le gel de silice, et
dans laquelle chaque matériau de la pluralité de matériaux granulaires a une teneur en matériau poreux inorganique de 70 à 90 % en masse, et une teneur en gel de silice de 3 à 20 % en masse,
**caractérisée en ce que** le liant inorganique est constitué seulement de ciment à base de silicate de calcium.

2. La litière animale pour animaux selon la revendication 1, dans laquelle le matériau poreux inorganique est sélectionné parmi au moins un élément du groupe constitué de zéolite, d'attapulgite, de sépiolite, de terre de diatomées et de schiste à diatomées.

3. La litière animale pour animaux selon la revendication 1 ou la revendication 2, dans laquelle la pluralité de matériaux granulaires est soumise à une hydrofugation.

4. La litière animale pour animaux selon n'importe laquelle des revendications 1 à 3, dans laquelle les matériaux granulaires comprennent un parfum.

5. La litière animale pour animaux selon n'importe laquelle des revendications 1 à 4, dans laquelle un pH de particule moyen des matériaux granulaires ne dépasse pas 12.

6. La litière animale pour animaux selon n'importe laquelle des revendications 1 à 5, dans laquelle une résistance de particule moyenne des matériaux granulaires est d'au moins 30 N.

7. La litière animale pour animaux selon n'importe laquelle des revendications 1 à 6, dans laquelle le matériau granulaire a une configuration en colonne avec un diamètre de particule moyen de 4 à 7 mm et une longueur de particule moyenne de 6 à 15 mm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006246797 A
- US 20040025798 A1
- US 4085704 A
- JP 2003023894 A
- WO 2008096457 A